# FASCICULE DE BREVET EUROPEEN

(11) **EP 2 327 604 B1**
(45) Date de publication et mention de la délivrance du brevet: **20.03.2013**
(21) Numéro de dépôt: 10189993.8
(22) Date de dépôt: 04.11.2010
(51) Int. Cl.: B62D 1/181

(54) **Dispositif pour le réglage d'une colonne de direction**
Einstellvorrichtung für eine Lenksäule
Device for adjusting a steering column

(30) Priorité: 25.11.2009 FR 0905665
(43) Date de publication de la demande: 01.06.2011
(73) Titulaire: ZF Systèmes de Direction Nacam, S.A.S., 41100 Vendome (FR)
(72) Inventeur: Fevre, Laurent, 41000 Saint-Sulpice (FR); Dupont, Eddy, 41100 Vendôme (FR); Sarandao, Alexandre, 37380 Monnaie (FR)
(74) Mandataire: Novagraaf Technologies

(56) Documents cités:
- WO-A1-2004/067356
- DE-C1- 3 737 225

## Description

La présente invention concerne un dispositif destiné au réglage d'une colonne de direction.

Les colonnes de direction de véhicules automobiles comprennent généralement un corps de colonne et une casquette montée au-dessus du corps ainsi qu'un élément de liaison destiné à assurer leur assemblage tout en permettant le débattement angulaire du corps relativement à la casquette.

Le réglage de la position angulaire de la colonne est effectué au moyen d'un ensemble moto-réducteur monté sur le corps et associé à un système électronique de commande susceptible d'être actionné par le conducteur du véhicule en vue d'optimiser la position du volant et le confort de conduite.

Les dispositifs de réglage existant comprennent, relativement à la position du volant, un pivot distal et un élément de liaison proximal dont les extrémités sont raccordées à la casquette et au corps via, respectivement, un axe de rotation et un ensemble moto-réducteur couplé à un patin coulissant.

Cependant, la recherche de degrés de liberté en rotation de l'ordre de 5° du corps relativement à la casquette nécessite le couplage de plusieurs éléments d'assemblage et, notamment, des glissières qui entraînent un excédent de poids sur la colonne et qui génèrent des frottements au niveau des liaisons.

Ces contraintes conditionnent le choix des pièces, leur profil et leurs dimensions ainsi que les matériaux utilisés.

En outre, leur assemblage engendrent des jeux relatifs susceptibles d'accélérer les phénomènes d'usure et de créer des décalages néfastes de l'orientation de la colonne et donc de la position du volant monté sur l'extrémité en saillie du corps de la colonne.

Le document DE 37 37 225 décrit un dispositif de réglage d'une colonne de direction comprenant un corps et une casquette assemblés au moyen d'un pivot et d'un élément de liaison permettant le déplacement du corps relativement à la casquette sous l'action d'un ensemble moto-réducteur monté sur ledit corps.

La présente invention a pour but de résoudre les problèmes techniques évoqués ci-dessus en simplifiant le dispositif de réglage de la colonne.

Ce but est atteint, selon l'invention, au moyen d'un dispositif dans lequel ledit élément de liaison comprend au moins un bras dont une première extrémité est fixée sur la casquette, où le bras présente une seconde extrémité, raccordée à une tige filetée d'axe longitudinal vertical portée par l'ensemble moto-réducteur, de telle sorte que ledit bras forme une articulation permettant le débattement angulaire réversible du corps relativement à la casquette.

Selon une caractéristique avantageuse, la fixation d'au moins l'une des extrémités du bras est assurée via un axe transversal permettant la rotation.

Selon un mode de réalisation particulier, ledit bras est au moins partiellement déformable de façon élastique.

Selon une variante avantageuse de ces modes de réalisation, les zones de déformation sélective sont constituées de tronçons cintrés et/ou de pincements ménagés sur le bras.

Selon une autre variante, les zones de déformation sélective sont constituées de lumières ménagées sur le bras.

Selon encore une autre variante, les zones de déformation sélective sont constituées de tronçons de bras de largeur et/ou d'épaisseur réduite.

Selon une autre caractéristique, ledit bras est pourvu d'éléments raidisseurs délimitant des zones non déformables et ménageant entre eux les zones de déformation sélective.

Selon encore une autre caractéristique, ledit bras comporte au moins une branche formée d'une lame métallique.

Selon une autre variante, ledit élément de liaison comporte deux branches symétriques formant un élément en U.

Selon encore une autre variante, ledit élément de liaison comprend des raccords intermédiaires élastiquement déformables en compression qui sont fixés respectivement entre les extrémités du bras et le corps et/ou la casquette.

Le dispositif de l'invention permet d'obtenir les degrés de liberté en pivotement du corps relativement à la casquette grâce à des axes de rotation et/ou à la capacité de déformation de l'élément de liaison et sans qu'il soit nécessaire d'utiliser des patins au niveau des points de fixation.

En conséquence, le poids total du système de direction s'en trouve réduit et les bruits de friction générés par les glissements des patins dans les systèmes antérieurs lors du réglage de la position de la colonne sont supprimés.

L'invention sera mieux comprise à la lecture de la description qui va suivre, en se référant aux dessins annexés sur lesquels :
La figure 1A représente une vue en perspective partiellement éclatée d'un premier mode de réalisation du dispositif de réglage de l'invention en position inversée.
Les figures 1B et 1C représentent des vues de détail du dispositif de la figure 1A.
Les figures 2A, 2B et 2C représentent des vues latérales du dispositif de réglage de la figure 1 en positions, respectivement, haute, intermédiaire et basse du corps de colonne.
La figure 3 représente une vue en perspective d'un second mode de réalisation du dispositif de réglage de l'invention.
Les figures 4A et 4B représentent des vues latérales du dispositif de réglage de la figure 3 en positions, respectivement, haute et basse du corps de colonne.
Les figures 5A et 5B, 6A et 6B, 7A, 7B, 7C et 7D, 8A et 8B représentent des vues de détail de face ou en perspective de variantes de réalisation de l'élément de liaison du second mode de réalisation du dispositif de l'invention.

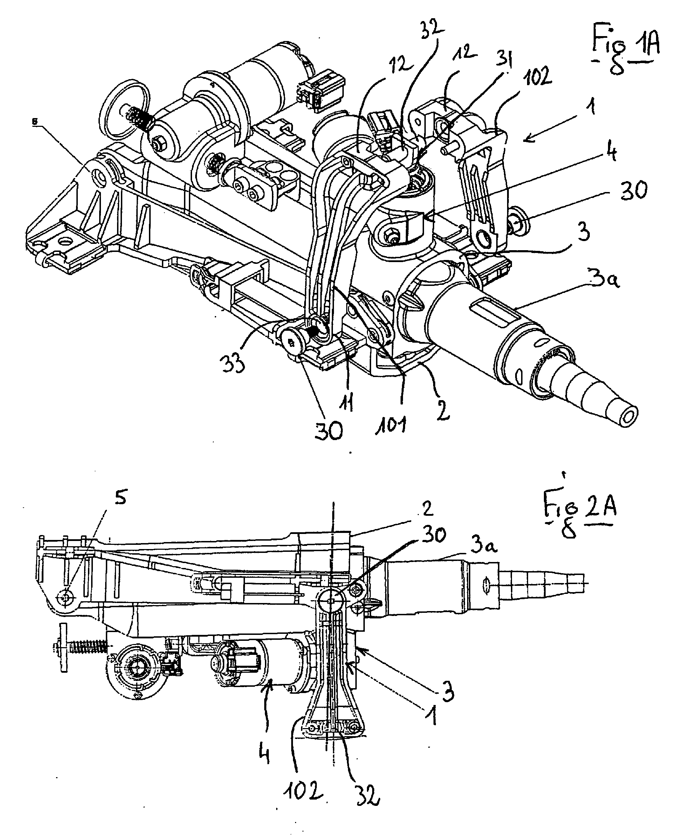

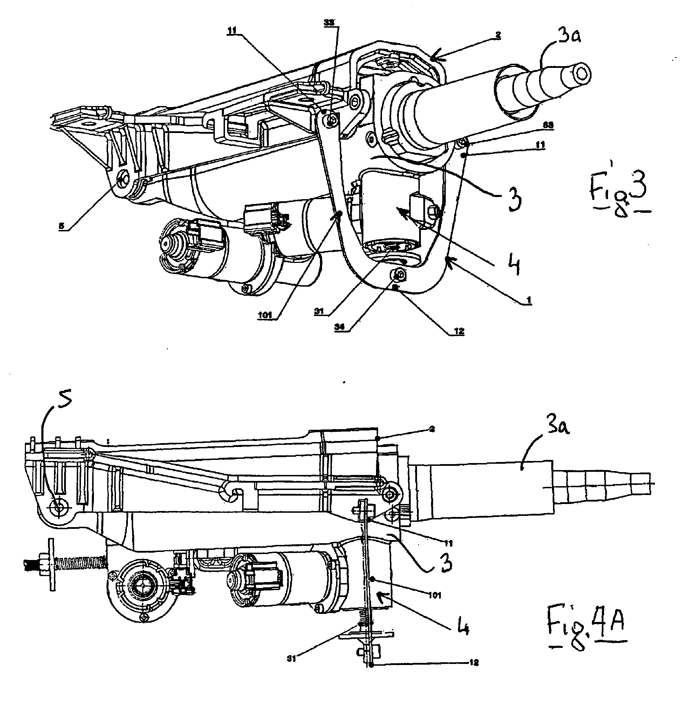

Le dispositif de réglage représenté, notamment sur les figures 1A et 3, est destiné à un système de colonne de direction de véhicule automobile.

Ce système comprend un corps 3 supportant une colonne 3a sur l'extrémité de laquelle est destiné à être monté un volant (non représenté) et une casquette 2 fixée, directement ou indirectement, au bâti du véhicule.

Le corps 3 et la casquette 2 sont assemblés au moyen, d'une part, d'un pivot distal 5 et, d'autre part, d'un élément de liaison 1 permettant le déplacement angulaire du corps 3 relativement à la casquette 2 sous l'action d'un ensemble moto-réducteur 4 monté sur ledit corps.

L'ensemble moto-réducteur est susceptible d'être actionné par le conducteur du véhicule via une commande électrique (non représentée.)

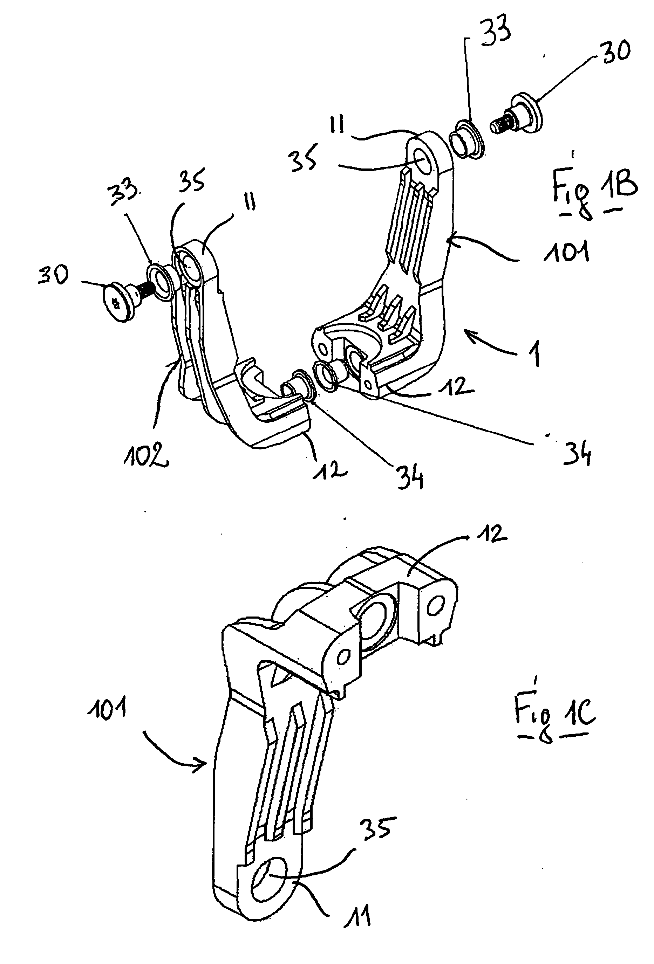

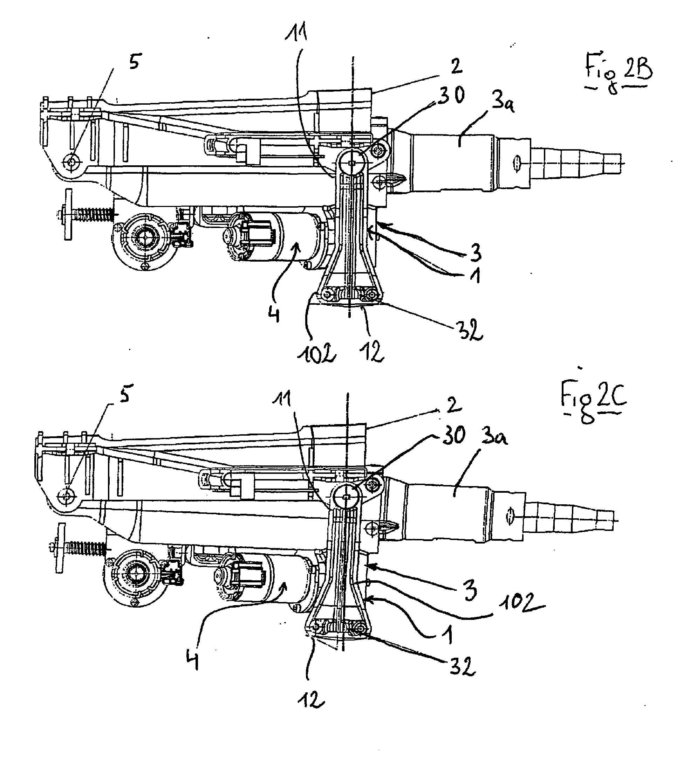

Dans le mode de réalisation des figures 1A, 1B, 1C, 2A et 2B, l'élément de liaison 1 est constitué de deux bras 101, 102 assemblés au niveau de leur extrémité inférieure 12 en se raccordant à une tige filetée 31 portée par l'ensemble moto-réducteur 4.

La fixation des bras 101, 102, respectivement, sur la casquette 2 et le corps 3 est réalisée selon des axes transversaux de telle sorte que le bras forme une articulation permettant le débattement angulaire réversible du corps relativement à la casquette.

Sur les figures 1A, 1B, 1C et 2A, 2B, les axes transversaux de fixation avec le corps 3 sont matérialisés par des vis ou goujons 30 logés dans des alésages transversaux 35 et associés à des paliers 33 (voir figure 1B).

La fixation d'au moins l'une des extrémités 11, 12 des bras 101, 102 est assurée via un axe transversal permettant également la rotation de l'élément de liaison 1.

Sur la figure 1A, l'extrémité supérieure 11 de chacun des bras assure la fixation avec la casquette 2 et offre une liberté de rotation de quelques degrés.

La seconde extrémité 12 est destinée à la fixation avec le corps 3 et est raccordée, dans ce but, à la tige 31 de l'ensemble moto-réducteur 4 via un pivot proximal 32 associé à des paliers 34 (voir figure 1B) autorisant également une rotation de quelques degrés. Il serait possible, selon une variante non représentée, de monter l'ensemble moto-réducteur 4 sur la casquette 2 au lieu du corps 3.

Sous l'action combinée de la tige 31 déplaçable verticalement, des axes des vis 30 et des pivots 32 coopérant avec des paliers, l'élément de liaison 1 agit comme une rotule vis-à-vis de la casquette 2 et du corps 3 et permet le débattement de la colonne 3a et du volant vers le haut ou vers le bas, relativement à la casquette.

Dans le mode de réalisation des figures 3 et suivantes, l'élément de liaison 1 est au moins partiellement déformable de façon élastique et comprend un bras formant un élément de liaison d'une seule pièce avec deux branches en U dont les premières extrémités respectives 11 sont solidaires de la casquette 2 tandis qu'une seconde extrémité 12, commune aux deux branches, est solidaire de l'ensemble moto-réducteur 4.

La seconde extrémité 12 est raccordée à une tige filetée 31 ou une vis sans fin coopérant en rotation avec l'arbre moteur de l'ensemble moto-réducteur 4.

Le bras 101 comporte au moins une branche formée d'une lame métallique de faible épaisseur présentant une flexibilité suffisante pour absorber, par déformation élastique, les débattements angulaires réversibles du corps 3 relativement à la casquette 2.

Dans ces conditions, il n'est pas nécessaire de prévoir des pivots et des paliers au niveau des points de fixation des extrémités 11, 12 de l'élément de liaison 1 sur la casquette et le corps qui peuvent être rigides.

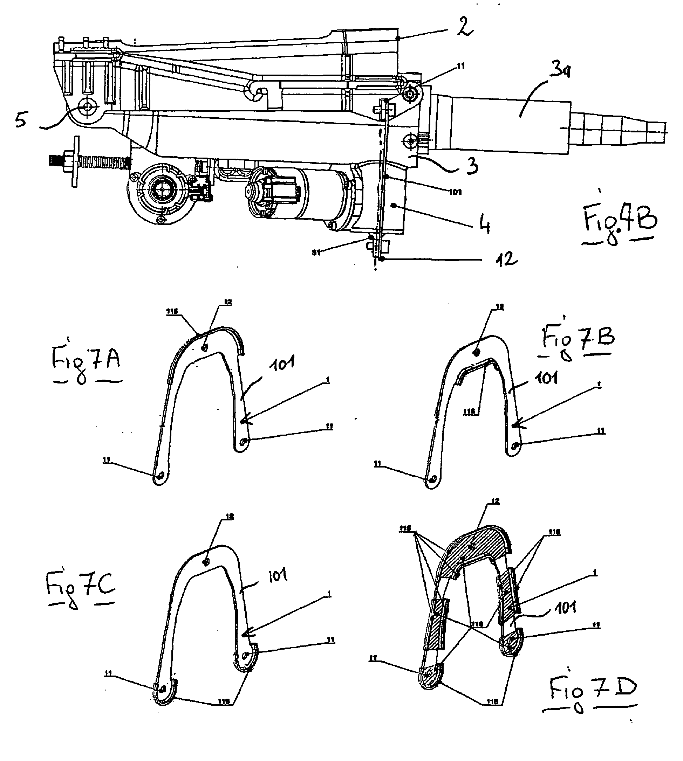

Les figures 4A et 4B représentent respectivement le corps 3 en position haute et basse.

Sur la figure 4A, le bras 101 est fléchi vers l'avant du véhicule tandis que, sur la figure 4B, il est fléchi vers l'arrière.

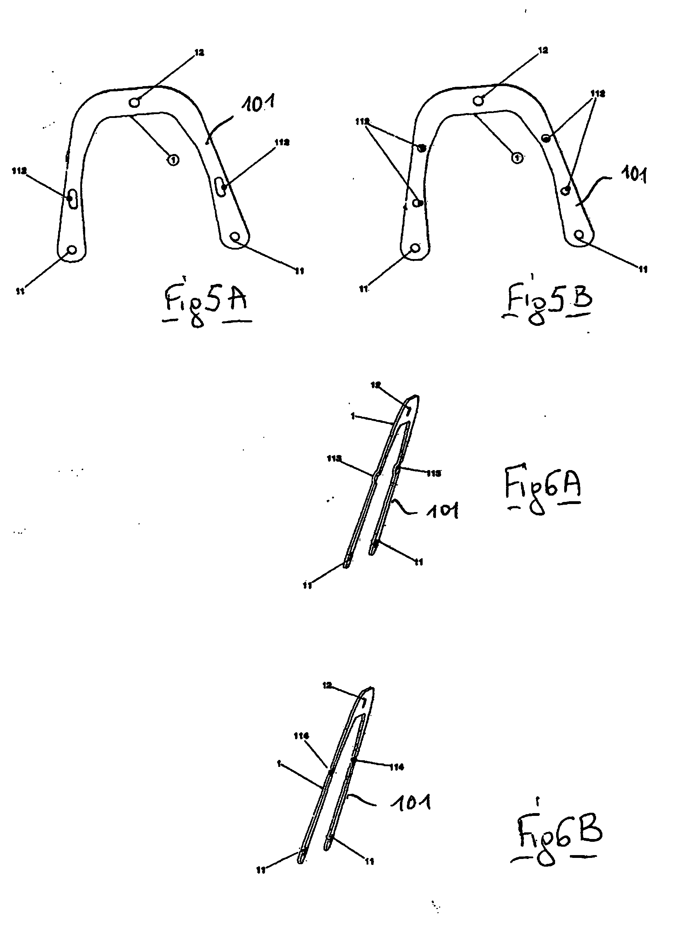

Dans la variante des figures 5A et 5B, le bras 101 présente des zones de déformation sélective formées de lumières 112.

Dans la variante des figures 6A et 6B, les zones de déformation sélective sont constituées de tronçons cintrés 113 ou de pincements 114.

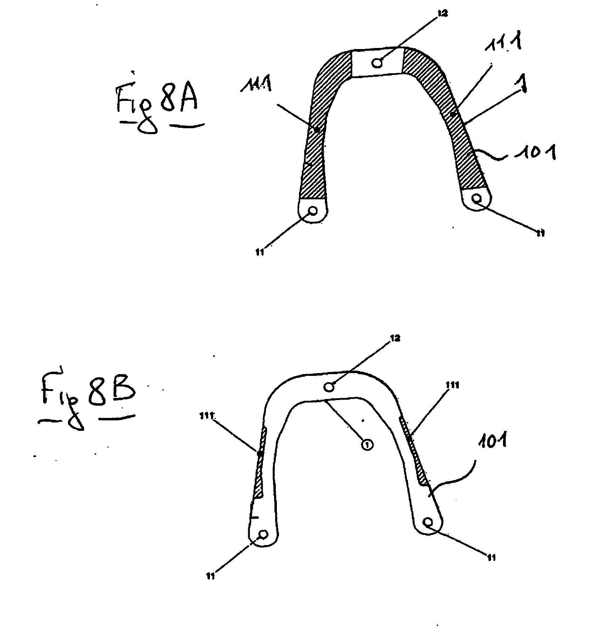

Dans la variante des figures 8A et 8B, les zones de déformation sélective sont constituées de tronçons 111, 112 de largeur et/ou d'épaisseur réduite par rapport aux autres tronçons du bras.

Dans les variantes des figures 7A à 7D, les bras sont pourvus d'éléments raidisseurs délimitant des zones non déformables et ménageant entre eux des zones de déformation sélective.

Les éléments raidisseurs comprennent des baguettes 115 périphériques montées sur le rebord des bras et encadrant, le cas échéant, des tronçons amincis 116 (figure 5D).

Bien entendu, il est possible, toujours selon l'invention, de combiner toute ou parties des variantes illustrées par les figures.

La capacité de déformation et la flexibilité peuvent être encore augmentées en disposant, de façon complémentaire, des raccords intermédiaires, réalisés en un matériau élastiquement déformable en compression, respectivement entre les extrémités des bras et le corps 3 et/ou la casquette 2.

Le bras peut être réalisé en métal ou avec tout autre matériau présentant les propriétés mécaniques requises pour assurer efficacement la fonction technique décrite tels que des matières plastiques ou des matériaux composites.

## Revendications

1. Dispositif de réglage d'une colonne de direction comprenant un corps (3) et une casquette (2) assemblés au moyen, d'une part, d'un pivot et, d'autre part, d'un élément de liaison (1) permettant le déplacement du corps relativement à la casquette sous l'action d'un ensemble moto-réducteur (4) monté sur ledit corps, ledit élément de liaison (1) comprend au moins un bras (101, 102) dont une première extrémité (11) est fixée sur la casquette (2), **caractérisé en ce que** le bras (101, 102) présente une seconde extrémité (12) raccordée à une tige filetée (31) d'axe longitudinal vertical portée par l'ensemble moto-réducteur (4) de telle sorte que ledit bras (101, 102) forme une articulation permettant le débattement angulaire réversible du corps relativement à la casquette.

2. Dispositif de réglage selon la revendication 1 **caractérisé en ce que** la fixation d'au moins l'une des extrémités (11, 12) du bras est assurée via un axe transversal permettant la rotation.

3. Dispositif de réglage selon la revendication 1 ou 2 **caractérisé en ce que** ledit bras (101, 102) est au moins partiellement déformable de façon élastique.

4. Dispositif de réglage selon la revendication 3 **caractérisé en ce que** ledit bras présente des zones de déformation sélective.

5. Dispositif de réglage selon la revendication 4 **caractérisé en ce que** les zones de déformation sélective sont constituées de tronçons cintrés (113) et/ou de pincements (114) ménagés sur le bras.

6. Dispositif de réglage selon la revendication 4 ou 5 **caractérisé en ce que** les zones de déformation sélective sont constituées de lumières (112) ménagées sur le bras.

7. Dispositif de réglage selon l'une des revendications 4 à 6 **caractérisé en ce que** les zones de déformation sélective sont constituées de tronçons (111) de bras de largeur et/ou d'épaisseur réduite.

8. Dispositif de réglage selon l'une des revendications 4 à 7 **caractérisé en ce que** ledit bras est pourvu d'éléments raidisseurs (115) délimitant des zones non déformables et ménageant entre eux les zones de déformation sélective.

9. Dispositif de réglage selon l'une des revendications précédentes **caractérisé en ce que** ledit bras (101, 102) comporte au moins une branche formée d'une lame métallique.

10. Dispositif de réglage selon l'une des revendications précédentes **caractérisé en ce que** ledit élément de liaison (1) comporte deux branches symétriques formant un élément en U.

11. Dispositif de réglage selon l'une des revendications précédentes, **caractérisé en ce que** ledit élément de liaison (1) comprend des raccords intermédiaires élastiquement déformables en compression qui sont fixés respectivement entre les extrémités (11, 12) du bras et le corps (3) et/ou la casquette (2).

12. Dispositif de réglage selon l'une des revendications 1 ou 2, **caractérisé en ce que** l'élément de liaison (1) est constitué de deux bras (101, 102) assemblés au niveau de leur extrémité inférieure (12) en se raccordant à la tige filetée (31) portée par l'ensemble moto-réducteur (4) et **en ce que** la fixation des bras (101, 102) respectivement, sur la casquette (2) et le corps (3) est réalisée selon des axes transversaux.

13. Dispositif de réglage selon la revendication 12, **caractérisé en ce que** les axes transversaux de fixation avec le corps (3) sont matérialisés par des vis ou goujons (30) logés dans des alésages transversaux (35) et associés à des paliers (33), la fixation des extrémités (11, 12) des bras (101, 102) est assurée via un axe transversal permettant également la rotation de l'élément de liaison (1).

14. Dispositif de réglage selon l'une des revendications 12 à 13, **caractérisé en ce que** l'extrémité supérieure (11) de chacun des bras (101, 102) assure la fixation avec la casquette (2), la seconde extrémité (12) est destinée à la fixation avec le corps (3) et est raccordée, à la tige (31) de l'ensemble moto-réducteur (4) via un pivot proximal (32) associé à des paliers (34).

## Claims

1. Adjustment device for a steering column comprising a body (3) and a cap (2) assembled by means of, on the one hand, a pivot and, on the other hand, a linking element (1) enabling the displacement of the body relative to the cap under the action of a gear motor assembly (4) mounted on said body, said linking element (1) comprises at least one arm (101, 102) a first end (11) of which is fixed onto the cap (2), **characterised in that** the arm (101, 102) has a second end (12) connected to a threaded shank (31) with a longitudinal vertical axis carried by the gear motor (4) so that said arm (101, 102) forms a hinge enabling the reversible angular displacement of the body relative to the cap.

2. Adjustment device according to claim 1, **characterised in that** the fixation of at least one of the ends (11, 12) of the arm is carried out via a transverse axis enabling rotation.

3. Adjustment device according to claim 1 or 2, **characterised in that** said arm (101, 102) is at least partially elastically deformable.

4. Adjustment device according to claim 3, **characterised in that** said arm has selective deformation zones.

5. Adjustment device according to claim 4, **characterised in that** the selective deformation zones are composed of arched segments (113) and/or pinches (114) housed on the arm.

6. Adjustment device according to claim 4 or 5, **characterised in that** the selective deformation zones are composed of openings (112) housed on the arm.

7. Adjustment device according to one of claims 4 to 6 ,**characterised in that** the selective deformation zones are composed of segments (111) of arm of reduced width and/or thickness.

8. Adjustment device according to one of claims 4 to 7, **characterised in that** said arm is provided with stiffener elements (115) demarcating non-deformable zones and housing the selective deformation zones between them.

9. Adjustment device according to one of the preceding claims **characterised in that** said arm (101, 102) comprises at least one branch formed from a metal strip.

10. Adjustment device according to one of the preceding claims **characterised in that** said linking element (1) comprises two symmetrical branches forming a U-shaped element.

11. Adjustment device according to one of the preceding claims, **characterised in that** said linking element (1) comprises intermediary elastically compressively deformable connectors which are fixed respectively between the ends (11, 12) of the arm and the body (3) and/or the cap (2).

12. Adjustment device according to one of claims 1 or 2, **characterised in that** the linking element (1) is composed of two arms (101, 102) assembled level with their lower end (12) by being connected to the threaded shank (31) carried by the gear motor assembly (4) and **in that** the fixation of the arms (101, 102) respectively, on the cap (2) and the body (3), is carried out along the transverse axes.

13. Adjustment device according to claim 12, **characterised in that** the transverse axes for fixation with the body (3) are marked by screws or pins (30) housed in transverse bores (35) and connected to bearings (33), the fixation of the ends (11, 12) of the arms (101, 102) is carried out via a transverse axis also enabling the rotation of the linking element (1).

14. Adjustment device according to one of claims 12 to 13, **characterised in that** the upper end (11) of each of the arms (101, 102) carries out the fixation with the cap (2), the second end (12) is intended for the fixation with the body (3) and is connected to the shank (31) of the gear motor assembly (4) via a proximal pivot (32) connected to bearings (34).

## Patentansprüche

1. Einstellvorrichtung für eine Lenksäule mit einem Körper (3) und einer Kappe (2), die mithilfe einerseits eines Gelenks und andererseits eines Verbindungselements (1) zusammengebaut sind, welches die Verschiebung des Körpers in Bezug auf die Kappe unter Wirkung einer auf dem Körper montierten Getriebemotoreinheit (4) ermöglicht, wobei das Verbindungselement (1) wenigstens einen Arm (101, 102) umfasst, der mit einem ersten Ende (11) an der Kappe (2) befestigt ist, **dadurch gekennzeichnet, dass** der Arm (101, 102) ein zweites Ende (12) aufweist, das mit einer Gewindestange (31) mit vertikaler Längsachse verbunden ist, die durch die Getriebemotoreinheit (4) abgestützt ist, derart, dass der Arm (101, 102) ein Gelenk bildet, welches den reversiblen Winkelausschlag des Körpers in Bezug auf die Kappe ermöglicht.

2. Einstellvorrichtung nach Anspruch 1, **dadurch gekennzeichnet, dass** die Befestigung des wenigstens einen Endes (11, 12) des Arms über eine Querachse sichergestellt ist, welche die Drehung erlaubt.

3. Einstellvorrichtung nach Anspruch 1 oder 2, **dadurch gekennzeichnet, dass** der Arm (101, 102) wenigstens teilweise elastisch verformbar ist.

4. Einstellvorrichtung nach Anspruch 3, **dadurch gekennzeichnet, dass** der Arm selektive Verformungszonen aufweist.

5. Einstellvorrichtung nach Anspruch 4, **dadurch gekennzeichnet, dass** die selektiven Verformungszonen aus taillierten (113) und/oder zusammengekniffenen (114) Abschnitten gebildet sind, die an dem Arm ausgebildet sind.

6. Einstellvorrichtung nach Anspruch 4 oder 5, **dadurch gekennzeichnet, dass** die selektiven Verformungszonen aus an dem Arm ausgebildeten Löchern (112) gebildet sind.

7. Einstellvorrichtung nach einem der Ansprüche 4 bis 6, **dadurch gekennzeichnet, dass** die selektiven Verformungszonen aus Abschnitten (111) des Arms mit reduzierter Breite und/oder Dicke gebildet sind.

8. Einstellvorrichtung nach einem der Ansprüche 4 bis 7, **dadurch gekennzeichnet, dass** der Arm mit Versteifungselementen (115) versehen ist, welche die nicht verformbaren Zonen begrenzen und zwischen diesen selektive Verformungszonen bilden.

9. Einstellvorrichtung nach einem der vorhergehenden Ansprüche, **dadurch gekennzeichnet, dass** der Arm (101, 102) wenigstens eine aus einem Metallstreifen gebildete Abzweigung umfasst.

10. Einstellvorrichtung nach einem der vorhergehenden Ansprüche, **dadurch gekennzeichnet, dass** das Verbindungselement (1) zwei symmetrische Abzweigungen umfasst, die ein U-Element bilden.

11. Einstellvorrichtung nach einem der vorhergehenden Ansprüche, **dadurch gekennzeichnet, dass** das Verbindungselement (1) elastisch druckverformbare Zwischenanschlüsse umfasst, die jeweils zwischen den Enden (11, 12) des Arms und des Körpers (3) und/oder der Kappe (2) befestigt sind.

12. Einstellvorrichtung nach einem der Ansprüche 1 oder 2, **dadurch gekennzeichnet, dass** das Verbindungselement (1) aus zwei Armen (101, 102) gebildet ist, die an ihrem unteren Ende (12) zusammengebaut sind, indem sie sich mit der Gewindestange (31) verbinden, die durch die Getriebemotoreinheit (4) abgestützt ist, und dass die Befestigung des Arms (101, 102) jeweils an der Kappe (2) und dem Körper (3) entlang der Querachsen hergestellt ist.

13. Einstellvorrichtung nach Anspruch 12, **dadurch gekennzeichnet, dass** die Querachsen zur Befestigung mit dem Körper (3) durch Schrauben oder Bolzen (30) ausgeführt sind, die in Querbohrungen (35) sitzen und mit Lagern (33) verbunden sind, die Befestigung der Enden (11, 12) der Arme (101, 102) über eine Querachse sichergestellt ist, welche auch die Drehung des Verbindungselements (1) erlaubt.

14. Einstellvorrichtung nach eine der Ansprüche 12 bis 13, **dadurch gekennzeichnet, dass** das obere Ende (11) jedes Arms (101, 102) die Befestigung mit der Kappe (2) sicherstellt, das zweite Ende (12) zur Befestigung mit dem Körper (3) bestimmt ist und über ein proximales Gelenk (32), das mit Lagern (34) verbunden ist, mit der Gewindestange (31) der Getriebemotoreinheit (4) verbunden ist.
